# EUROPEAN PATENT SPECIFICATION

(11) **EP 0 796 167 B1**
(45) Date of publication and mention of the grant of the patent: **12.09.2001**
(21) Application number: 96934556.0
(22) Date of filing: 07.10.1996
(51) Int. Cl.: B29C 51/16

(54) **METHOD AND APPARATUS FOR LOADING LABELS INTO A MOULD OF A THERMOFORMING MACHINE**
VERFAHREN UND VORRICHTUNG ZUM LADEN VON ETIKETTEN IN EINE FORM EINER WARMFORMMASCHINE
PROCEDE ET APPAREIL DE CHARGEMENT D'ETIQUETTES DANS UN MOULE D'UNE MACHINE DE THERMOFORMAGE

(30) Priority: 05.10.1995 IT VR950083; 18.01.1996 IT VR960004
(43) Date of publication of application: 24.09.1997
(73) Proprietor: ISAP OMV GROUP S.P.A., 37025 Parona (IT)
(72) Inventor: PADOVANI, Pietro, I-37100 Verona (IT)
(74) Representative: O'Byrne, Daniel Joseph
(86) International application number: EP9604342
(87) International publication number: WO9712751

(56) References cited:
- EP-A- 0 678 372
- DE-A- 4 137 982

## Description

The present invention relates to a method and an apparatus for loading pre-punched and three-dimensionally pre-shaped labels into a female mould or die having one or more forming cavities in a thermoforming machine or press for obtaining hollow objects with a bottom wall, such as beakers, cups, basins, trays, vases and the like starting from a sheet or tape of thermoformable material.

It has already been proposed in the thermoforming art to load into the female or double female mould a label before carrying out the thermoforming process of an object or objects, so as to cause a close and permanent adhesion obtained under heat and pressure conditions between label loaded into the or each forming cavity of the mould and outer surface of the respective object thermoformed in the forming cavity - see for instance Italian patent application no.VR94A000014 filed on February 24, 1994 in the name of the applicant.

More particularly, when tray or jar articles being polygonal (typically square or rectangular) in plan view are to be thermoformed, one proceeds with die-cutting of the labels, each of which thus has a central square or rectangular area that is designed to cover the outer surface of the bottom of a thermoformed container and from each side of which four lateral flaps or wings extend outwards. Between each pair of adjacent side flaps an enlarged recess is provided at the central zone, which is arranged to form after thermoforming of the tray or jar a receiving seat of a respective rounded corner between the bottom and two adjacent side walls of the tray, corner that is designed to remain "uncovered", i.e. not affected by the label.

With the solutions put forward up to now, however, undesired inconveniences may occur at the rounded lateral corner of the tray or jar, where not infrequently misalignments, wrinkles and other visible defects in the positioning of the edges of the label on the thermoformed object, even if the corners of the object, and thus those of the mould, are rounded with a wide bending radius. Useless to say that such defects affect the quality level of the manufactured object and result in a high rate of rejected items, waste of materials and decrease in productivity.

This occurs because each pre-punched label, before being laid in a respective forming cavity of the female mould, is first withdrawn by means of a respective sucking plug arranged to engage the central zone of the label and to transfer and load it into the mould, the said plug having substantially the same configuration as a counter-die or male mould for the female mould. The label is then placed in a pre-shaping template having a homothetic configuration to that of the female mould in order to force the side wings of the label to adhere to the sucking side faces of the respective plug element before being transferred, located and released in a respective moulding cavity in the female mould.

During this operation the side wings of the label are simultaneously subjected to a severe constraint while being inserted into the pre-shaping template, and thus, also owing to unavoidable although small positioning inaccuracies, the pairs of adjacent side wings often engage with one another during the relatively rapid bending towards the side walls of the plug to which they are subjected, thereby producing showy wrinkles and ill-shaped overlapping that are unacceptable for aesthetic purposes.

Moreover, it has already been suggested in the thermoforming art to load a label into the or each forming cavity of a double-female mould before obtaining the object or objects by a thermoforming operation. While the thermoforming process is being carried out deep and permanent heat adhesion under pressure occurs between label pre-loaded into the or each forming cavity of the mould and outer surface of the respective object being thermoformed in the same forming cavity, e.g. as disclosed in the patent application nr.VR94A000014 filed on February 24, 1994 in the name of the applicant and relating to an "apparatus for loading labels into a double-female die of a thermoforming machine".

Such a loading apparatus, however, is designed to load labels into a double-female die when the female dies, in turn, move laterally to a rest position out of vertical alignment with the male die, so as to be easily accessible from above and in any case not obstructed by the presence of the male die. Thus, that apparatus is unsuitable and does not land itself to the loading of labels in single-female die thermoforming apparatuses, in which the female die moves only axially to and from the male die.

In EP-A-0 678372 (which is a document within the meaning of Article 54(3) EPC) there is disclosed an apparatus for positioning label in thermoforming dies, which comprises, in sequence, a first storing station for the labels to be loaded, a second station of correct positioning of each label withdrawn from the storing station, and a third shaping station for folding the labels coming from the correct positioning station before transferring them to a female die. With this apparatus loading of the labels into the die occurs after rotation through 90° of both the female die with respect the male die and the loading group, which obviously involves considerable construction complications in the support structure for the female die and handling and synchronisation problems in linear displacements for some components of the apparatus and in linear displacements for others. As a matter of fact, setting and synchronisation of an apparatus of this type having, as already said, a high number of work stations and female die, and the more so if designed to effect angular displacements, require a minimum time of a few hours, but sometimes of a few days both during initial installation and especially at each change of thermoforming die.

The main object of the present invention is to eliminate or drastically reduce the drawbacks referred to above in connection with the solutions put forward up to now by providing a method and an apparatus for loading labels into a single-female die in a thermoforming machine or press, where a reduced number of work stations is provided.

Another object of the present invention is to make it possible a quick and accurate setting of the label loading apparatus both upon initial installation and while changing the die, thereby ensuring an almost constant production without heavy dead times of perfectly labelled thermoformed objects.

According to a first object of the present invention there is provided a method for loading labels into a mould including a single-female die and a counter-die or male die of a machine or press for thermoforming hollow objects with a bottom wall from a sheet or strip of thermoformable material fed between female die and counter-die, which comprises
laying a number of labels equal the number of forming cavities onto a respective seat of a dummy female die for centering or correctly setting the labels,
three-dimensional pre-shaping of the labels in the same dummy female die,
transfer of the thus pre-shaped labels from the dummy female die to the to the zone delimited on the one side by the female die and on the other from the sheet and the counter-die,
removal of the or each previously thermoformed object from the female die, and
loading of the pre-shaped labels transferred from the dummy die into a respective forming cavity of the female die.

Such a method ensures the considerable advantage of adopting a maximum of only two work stations for holding, laying and pre-shaping the labels for preparing them to be loaded into the female die which remains always axially aligned in front of the counter-die.

According to another aspect of the present invention there is provided an apparatus for loading labels into a mould including a single female die and a counter-die or male die for a machine or press for thermoforming hollow objects having a bottom wall starting from a sheet or strip of thermoformable material fed between female die and counter-die, which apparatus has a label feeder and is characterised in that it comprises a dummy female die having a label shaping cavity or cavities homothetic to those of the female die and being each formed with a top receiving seat for temporarily receiving and centering labels in a bidimensional configuration, and a shaping and transferring plug for each seat of the dummy die, which is designed first to push the labels centered on the top of the dummy die in a respective seat for being three-dimensionally pre-shaped and subsequently for transferring them in the pre-shaped configuration to the zone between female die and counter-die and then laying the same in the female die.

Advantageously, the said label feeder comprises a punching-cutting group acting on a continuous label tape.

Further aspects and advantages of the present invention will better appear from the following detailed description of some at present preferred embodiments of a label loading apparatus, given by way of non limiting examples with reference to the accompanying drawings, in which:
Figure 1 shows a diagrammatic front elevational view a thermoforming plant comprising a thermoforming machine having a single-female die and a label loading apparatus with two work stations in accordance with the present invention;
Figure 2 is a partial top view of the plant of Fig. 1;
Figures 3 and 4 show each a view in an enlarged scale of a detail concerning the label loading apparatus of the plant of Fig. 1 in a different operation stage;
Figure 5 shows a cross-sectional view taken along the line V-V of Fig. 1 on a slightly enlarged scale and with parts half in cross-section in an operative position and half in a different operative position;
Figure 6 is a partial diagrammatic view in cross-section of a dummy die having a bidimensional label disposed in a centering seat on the top of a cavity or recess thereof, whereas a shaping and transferring plug is approaching from above;
Figure 6A is the same view as Fig. 6 but with the shaping plug inserted into the dummy die and three-dimensionally pre-shaped label;
Figures from 7 to 11 are each a diagrammatic side elevational view which shows the plant in sequentially operational stages subsequent to that illustrated in Fig. 6;
Figure 7A shows a variation of Figure 7, in which it is the dummy die that moves with respect to the shaping plug or plugs;
Figures 12 and 13 are diagrammatic front elevational views with parts in section, which illustrate another embodiment of label loading apparatus in two different operative operation stages;
Figures 14 and 15 are diagrammatic front elevational views of a further embodiment of the label loading apparatus in two different operation stages and with a different type of label feeder from a shearing machine belonging to the label loading apparatus;
Figures 16 and 17 are diagrammatic elevational views of a further embodiment of the label loading apparatus from an outside shearing machine operating in sequential cycle with it;
Figure 18 shows a detail in cross-section of Fig. 16; and
Figures 19 and 20 show a further embodiment of label loading apparatus with label feeder coming from an outside shearing machine operating in sequential cycle with it.
Figure 21 is a perspective diagrammatic view of a seat of a pre-shaping template or dummy die for labels to be applied to a basin or tray container being rectangular in a plan view;
Figure 22 is a top view of a punched label for a basin container being rectangular in plan view;
Figure 23 is a top view of the pre-shaping seat of Fig. 21 having a sucking plug or counter-die inserted therein and bearing a punched label of Fig. 22;
Figure 24 shows a detail in section of Fig. 23;
Figure 25 shows a perspective view of the sucking plug of Fig. 23 having a label partly adherent thereon after withdrawal from a pre-shaping template;
Figure 26 is a plan view of the sucking plug of Fig. 25; and
Figure 27 shows a front elevation view of the sucking plug of Fig. 26.

In the accompanying drawings equal or similar parts or components have been indicated with the same reference numerals.

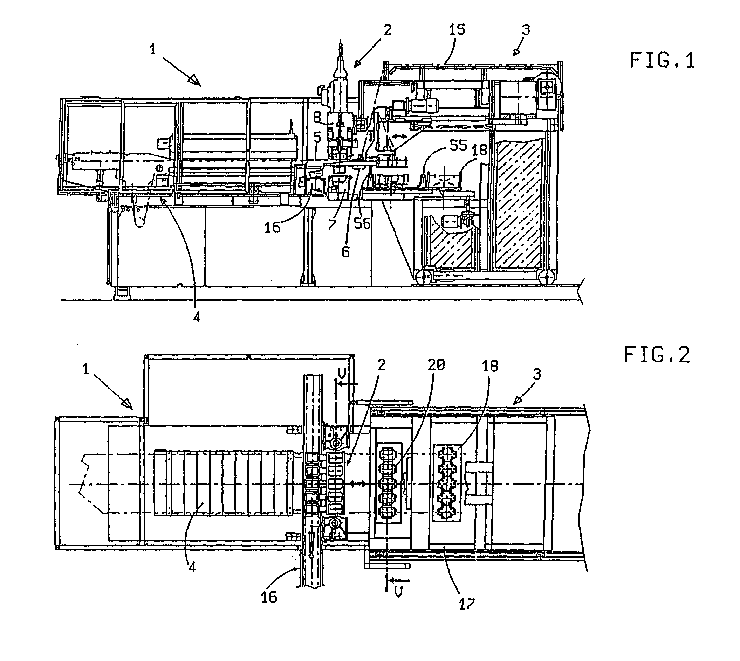

With reference first to Figures 1 to 11 it will be noted that a thermoforming plant, generally indicated at 1, comprises a thermoforming press or machine 2 interlocked with a label loading apparatus 3 for obtaining externally labelled hollow objects having a bottom wall starting from a continuous sheet or tape of thermoformable material fed by an upstream located group 4 arranged to feed a hot tape of thermoformable material, e.g. forwarded to the thermoforming press 2 by means of a chain conveyor 6.

The thermoforming machine includes a mould comprising a single-female die, e.g. arranged below, and a counter-die or male die 7 arranged above the female die in vertical alignment therewith. The female die is mounted in such a way as to be able to move axially away from and towards the counter-die 7 between a closed position against the counter-die and an open position below and away from it. Actuating means, e.g. of conventional type well known in the art, and thus not described in detail, are provided for moving the female die.

Of course, the female die could also be arranged above the male die 7 depending upon design requirements.

The female die has one or more forming cavities 9, each of which is provided with a respective mobile bottom wall 10 which is vertically movable in order to remove or lift a thermoformed object, such as a round-corner basing 11 rectangular in top view, from the female die. To this end, suitable drive means (not shown in the drawings) is provided for each mobile bottom wall of the female die, as it is known in the art.

The male die comprises as many counter-dies as are forming cavities in the female die, which are arranged vertically displaceable within a respective receiving seat 12 formed in a head block having outer overall dimensions equal to and complementary with that of the female die 8. Each seat 12 also locates a hollow punch cutter, generally indicated at 14, which is designed to cut the rim of an object 11 just formed before the mould is opened in order to separate it from the scrap sheet 15 that will be moved away from the thermoforming area by means of the chain conveyor 6 (Fig. 1).

Upstream of the thermoforming area at the dies 7 and 8 there is advantageously provided a suitable conveyor 16 for moving away the objects 11 loaded onto it at the thermoforming area.

Downstream of the thermoforming area there is arranged the label loading apparatus 3 which comprises a support structure 17 for two stationary work stations, i.e. a store 18 for bidimensional piled up labels 19 and a dummy female die 20 arranged between the female die 8 and the store at the same distance therefrom. Of course, there is provided the same number of stores 18 and shaping cavities 21 in the dummy die 20 as that of the forming cavities in the female die 8.

Each shaping cavity 21 has at the top thereof a peripheral seat 22 arranged to temporary receiving and centering a label 19 of bidimensional configuration, as will be further explained below, whereas from the bottom a support engagement means, e.g. a support and guide plate 23, for a label loaded into the seat 22 can be raised and lowered, which is, for instance, carried on the end of a piston rod of a fluidynamic cylinder and piston group 24 and guided by guide rods 25.

Each store 18 is designed to be loaded preferably automatically by suitable loading means, not shown in the drawings, with a predetermined number of stacked labels, the uppermost label being automatically brought to a predetermined level in its respective store by any suitable means.

Above the dummy die 20 and the store or stores 18, and thus above the support structure 17, there is provided a stationary support and sliding guide 26 which extends in a direction normal to the axial plane containing the male die 7 and the female die 8.

A carriage or slide 27 is slidably mounted on the guide 26 and carries a depending vertical arm or slide 28 which supports underneath a transversal contraction-expansion mechanism 29 adjacent to the thermoforming machine 2 and a rear cross member 30 which extend horizontally and perpendicularly to the guide 26. The contraction-expansion mechanism 29 is designed to support a shaping and transfer plug 31 for each shaping cavity 21 in the dummy die 20 arranged below it and to cause a contraction or reciprocal moving closer of the plugs 31 before or during the return stroke, as will be further described below, whereas the rear cross member 30 supports one or a plurality of suction cups 32 controlled by a suitable vacuum source, not shown, for withdrawing labels from the stores 18 and transferring them to a respective receiving seat 22 in the dummy die 20.

The carriage or slide 27 is actually provided with suitable drive means, such as a motor-reduction unit 33, for its backwards and forwards movements, and thus in both directions (double arrow X) along the guide 26, whereas the contraction-expansion mechanism 29 and the cross member 30 move vertically together (double arrow Y) while being guided along the arm 28, e.g. by means of suitable drive means, such as one or a pair of fluidodynamic piston and cylinder groups 34. The distance between the plugs 31 and the sucking cups 32 is maintained constant and equal to that between the dummy die 20 and the stores or the dies 7 and 8.

The side walls of the shaping plugs 31 have a plurality of holes (not shown in the drawings) in communication with a suitable vacuum source and a source of fluid (air) under pressure (both not shown). Similarly, the plate 23 or another support means in each shaping cavity 21 in the dummy die 20 communicates through its hollow guide rods 25 with a fluid source, also not shown, for purposes that will be explained below.

Of course, the whole operation of the plant is controlled by an electronic control unit, not shown.

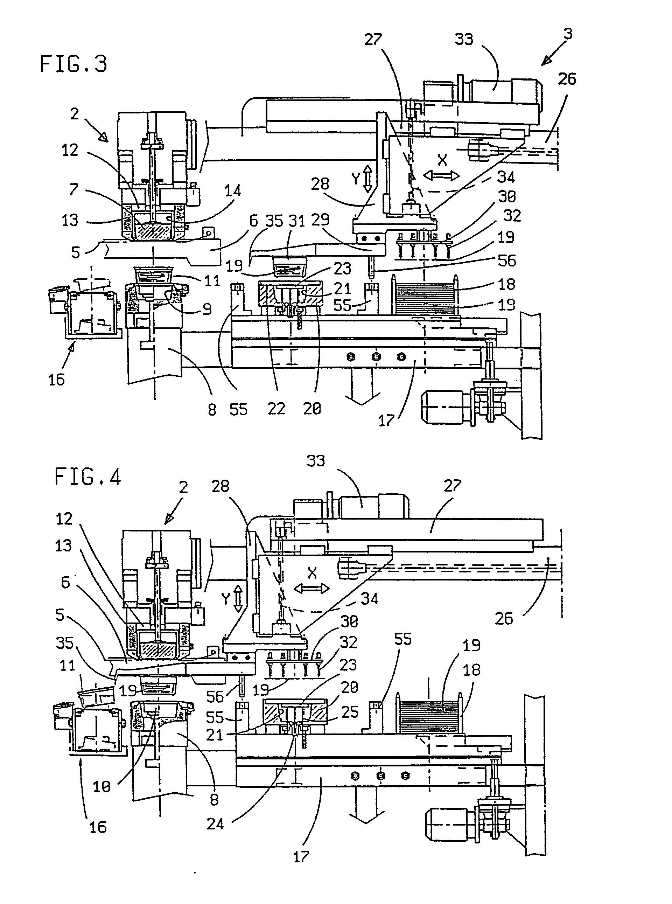

With a thermoforming plant such as that described above starting from the situation illustrated in Fig. 3, i.e. with sucking cups 32 that after having been lowered and set in a sucking condition have just been lifted above the stores 18, from where they have withdrawn a plurality of labels 18, while at the same time the plugs 31 have come out from a respective shaping cavity 21 of a dummy die and have changed their mutual distance, i.e. they have move closer to one another, the mould of the thermoforming machine 2 is been opened, i.e. the female die 8 has been lowered, thereby causing at the same time its mobile bottom walls or extractors 10, that carry the thermoformed objects 11 in the respective forming cavities 9, to raise to a level slightly higher than the free edge of the respective forming cavities 9.

At this point a motor-reduction unit 33 is energised, which results in the carriage 27 being moved forwards towards the thermoforming press 2, thereby reaching the condition illustrated in Fig. 4, where the sucking cups with the plane labels 19 carried by them are arranged axially vertically aligned above the dummy die 20, whereas the contraction-expansion mechanism 29 has moved to the thermoforming area above the female die 8 (now in its lowered position) and below the sheet 5 and the upper counter-die 7. During its insertion movement between the dies the contraction-expansion mechanism 29 by means of a front lug or lugs 35 pushes the object or objects 11 while supported by their respective extractors 10 away from the forming cavities of the female die 8 and transfers them onto the adjacent conveyor 16, thereby freeing the space above the extractors 10 which are thus ready to be lowered into their respective forming cavities in the female die 8 for receiving a respective pre-shaped label 19 which is brought by one of the plugs 31 carried by the contraction-expansion mechanism 29, as will further described below.

Of course, the movement of the thermoformed and externally labelled objects can occurs by using any suitable different from lugs 35, such as one or more air jets, an engaging arm for the objects, sucking cups and the like.

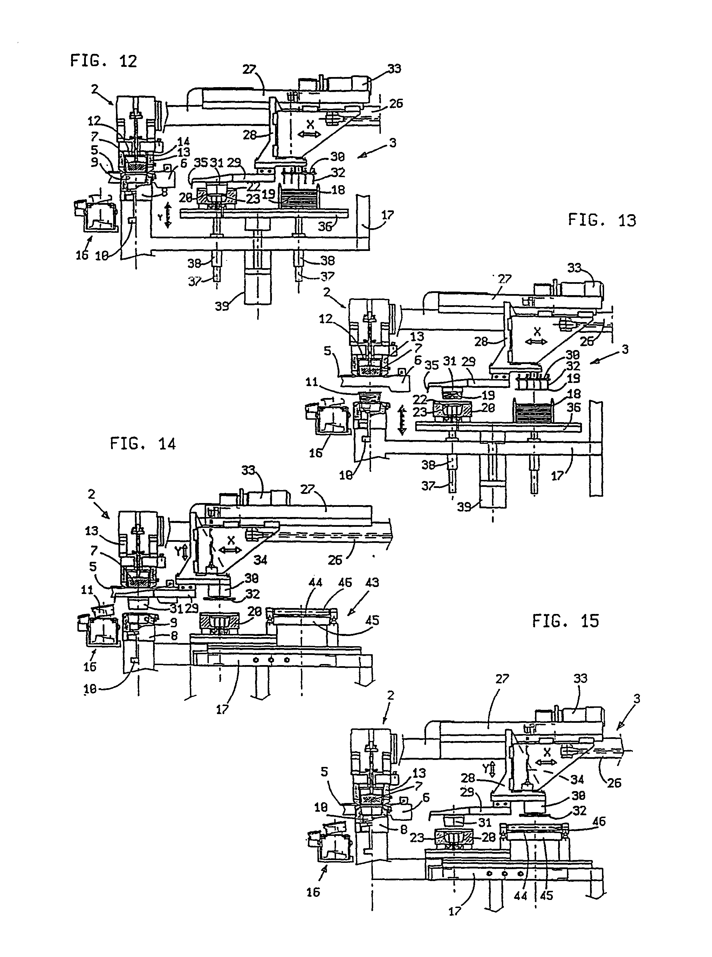

At the end of the feeding forward movement of the carriage 27 the fluidodynamic groups 34 are activated in order to cause lowering of both the contraction-expansion mechanism 29 and the cross member 30 (Fig. 10) so as to insert the plugs 31 with the pre-shaped labels 19 adhering thereto into a respective forming cavity in the female die 8 and to load at the same time the plane labels 19 carried by the sucking cups 32 into their respective receiving seats 22 in the dummy die 20 after their respective plates 23 have moved to a height corresponding to the bottom of the seats 22 in order to assist in supporting the labels 19 in a plane and centered arrangement.

At the end of the lowering movement of both the contraction-expansion mechanism 29 and the cross member 30 air under pressure is supplied to the plugs 31 in order to cause the release and the laying of the pre-shaped labels 19 accurately adhering to the side walls of their respective forming cavities 9 which is already in a depression condition and the plates 23 are set in communication through their respective tubular guides 25 with the vacuum source so that the plates can develop a sucking action onto the label 19 before the same is released by the sucking cups 32, thereby the label after a possible initial centering in its respective seat 22 is permanently engaged, and thus no longer free to move randomly, by some component of the loading apparatus.

A reverse vertical lifting movement is then caused by the fluidodynamic groups 34 in order to arrange the loading apparatus in the attitude illustrated in Fig. 11 and the return movement of the carriage 27 is effected in order to carry the empty plugs 31 and sucking cups 32, respectively, above the dummy die 20 and the store 18.

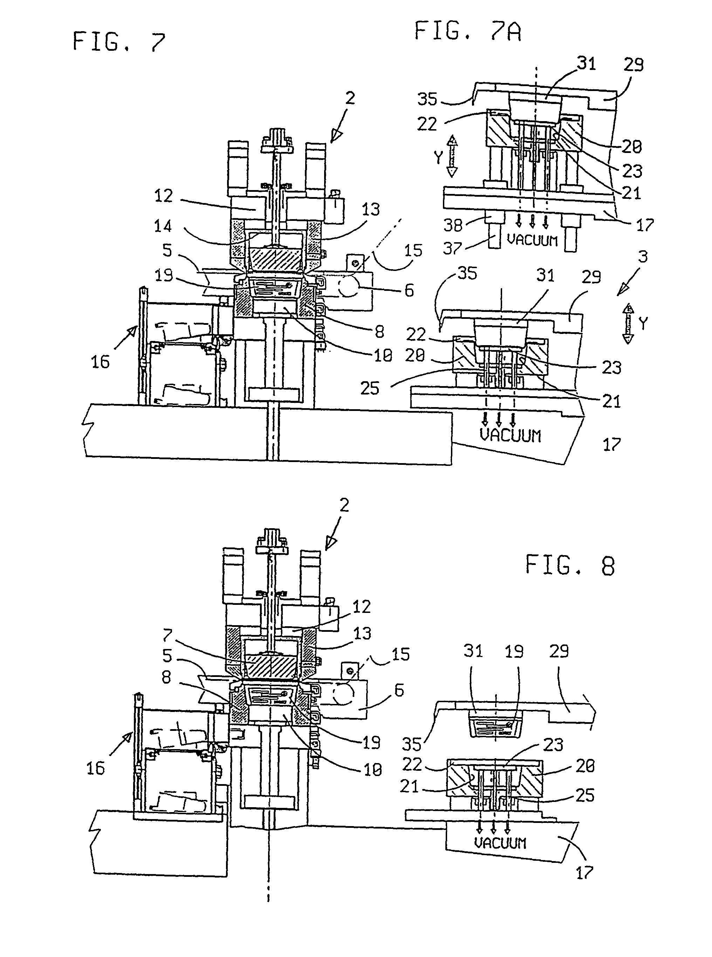

Meanwhile, the male and female dies (after a predetermined step forward of the sheet 5 by means of the chain conveyor 6) are caused to close onto one another by the electronic control unit in order to obtain a moulding of objects 11 (Fig. 7). Once the return stroke of the carriage 27 has been terminated and the contraction-expansion mechanism 29 has expanded, thereby increasing the distance among the plugs 31, the fluidodynamic groups 34 cause vertical lowering of the plugs 31 against a respective flat label 19 placed in the seat 22 underneath of the dummy die 20, whereas the sucking cups engage the uppermost label in the label stake in the store 18 underneath.

As shown in Fig. 7, each plug 31 during its descent abuts against a respective pre-punched flat label and pushes it, while being assisted by the engagement means or plate 23 underneath into a shaping cavity 21 of the dummy die 20, thereby deforming it and forcing it to take a three-dimensional configuration with its bottom portion resting on the plate 23 and abutting against the lower face of the plug 31 and its side walls standing with respect to the bottom portion and inserted in a gap between the corresponding side walls of the forming cavity 21 and the side walls of the plug 31.

Once the descent stroke is terminated, the holes opening both on the front wall and on the side walls of each plug 31 a set into communication with a vacuum source to cause the now three-dimensionally configurated labels 19 to stably adhere to their respective plug 31, and then the tubular guides 25 of the plates 23 are set into communication with the atmosphere, thereby releasing the labels in the shaping cavities 21 from their respective plate 23.
At the same time the sucking cups 32 are se into communication with a vacuum source in order to engage the uppermost labels in the various stores 18, after which a lifting stroke of the contraction-expansion mechanism 29 with its plugs 31 loaded with a pre-shaped label 19 and of the cross member 30 with its sucking cups carrying flat labels 19 (Figs. 3 and 8)

The dies 7 and 8 are then caused to move apart from one another, i.e. the die 8 moves downwards with respect to the counter-die, while the objects 11 are extracted from the forming cavities 9 of the female die by the extractors 10 before the beginning of a new stroke of the carriage 27 towards the thermoforming machine 2 (Fig. 9) to transfer the labels thus pre-shaped carried by the plugs to the zone between the female die and the counter-die and the flat labels carried by the sucking cups above the dummy die. And so on for successive operation cycles of the thermoforming machine.

In the embodiment shown in the Figures 12 and 13 the contraction-expansion mechanism 29 and the cross member 30 carried by the slide 28 perform only horizontal movements in the direction of the double arrow X parallel to the guide 26. The dummy die 20 and the store 18 are instead supported by a platform 36, which is movably mounted in a (vertical) direction normal to the direction X along guides 37 slidably mounted in respective fixed sleeves 38 carried by the support structure 17. The movements of the platform 36 are controlled by a suitable reversible actuator, e.g. a fluidodynamic cylinder and piston group 39 having, for example, its cylinder secured to the support structure 17 and its piston rod connected to the platform 36.

In other words, the reciprocal approaching and departing movements among the plugs 31 and dummy die on the one side and among the sucking cups 32 and the store 18 on the other side are performed by the dummy die 20 and the store 18, whereas the plugs and the sucking cups are stationary.

The same kind of vertical movement of the dummy die 30 is provided in the embodiment of Fig. 7A.

In the embodiments illustrated in Figures 14 to 20 instead of the store 18 there is provided a cutting-punching group, generally indicated at 43, e.g. of a suitable type well known in the art, arranged to cut and punch the labels 19 from a continuous sheet 44 being fed stepwise on a resting plane 45 on which a cutting roller 46 can move backwards and forwards.

Figures 14 and 15 show an embodiment of a label loading apparatus as that shown in Figures 3 and 4, but equipped with a cutting-punching group 43.

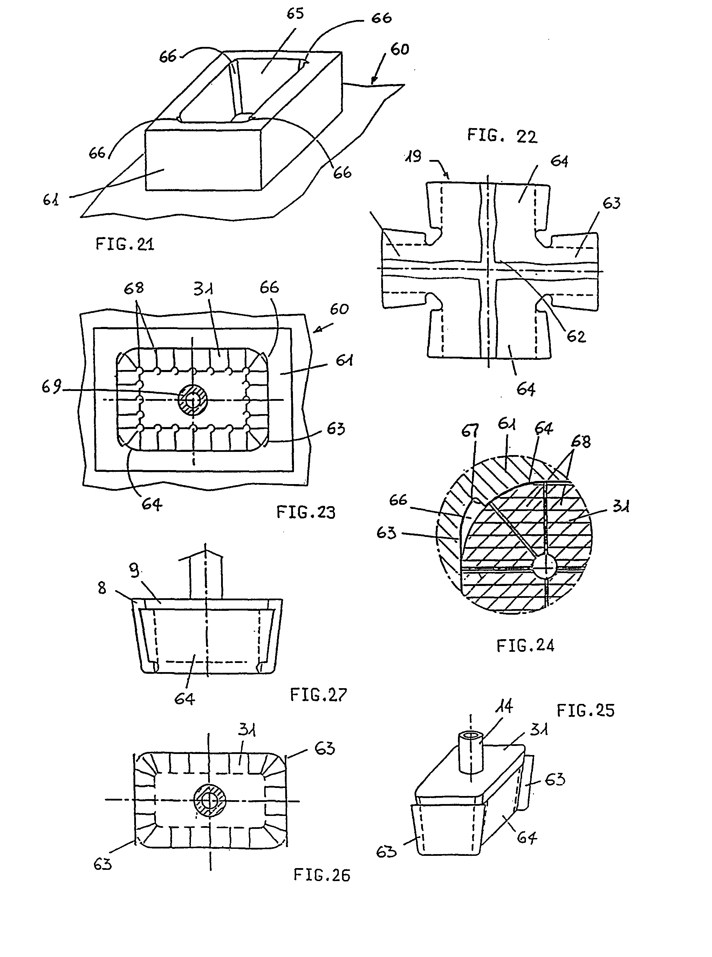

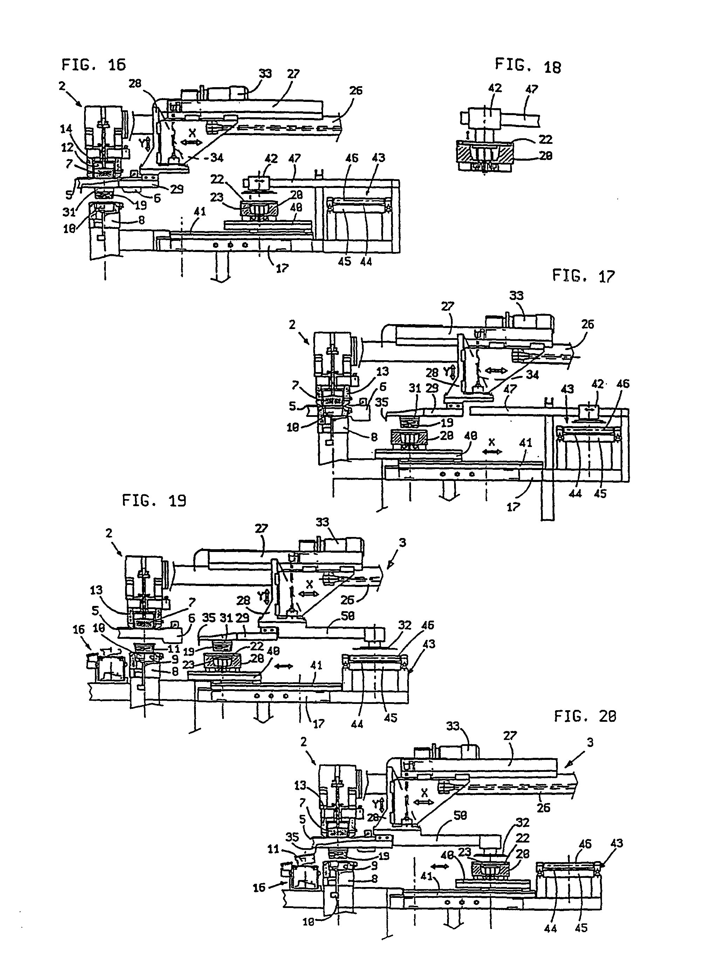

In the embodiments of Figures 16 to 20 the work station comprising the dummy die 20 is mobile, i.e. the dummy die 20 is movably arranged on the support structure 17 in a direction parallel to that of the sliding guide 26 between a laying position for the flat labels 19 into the seat or seats 22 relatively far away from the thermoforming press 2 and a pre-shaping position of the labels by means of a respective plug 31 near to the thermoforming machine.

More particularly, in the embodiment of the Figures 16 to 18 the dummy die 20 is supported by a slide or carriage 40 which can slide on fixed guides 41 carried by the support structure 17 and extending parallel to the guide 26 and is controlled by a suitable reversible linear actuator (not shown in the drawings). The length of the stroke between the laying position and the pre-shaping position is equal to backward and forward movements of the carriage 2.

In the laying position the dummy die 20 is loaded by an upper head 42, e.g. comprising sucking cups or other suitable means, such as those of plate type axially displaceable upon control, which can move between the laying position and a withdrawal position of flat labels 19 at the cutting-punching group 43 arranged to cut and punch the labels from a continuous tape 44.

The movement of the head 42 can occur along one or more fixed sliding guides 47 parallel to the guides 41 or, if desired, by causing the head 42 to be angularly displaced along a circular path.

In this embodiment the carriage 27 supports only the contraction-expansion mechanism 29 with its plugs 31 which can be displaced both in direction X (horizontally) for entering and coming out the thermoforming zone and in the direction Y (vertically) for pre-shaping the labels, whereas the dummy die 20 is in the pre-shaping position (Figs. 18 and 17) and for the subsequent loading into the female die 8, while the dummy die 20 has been moved in the laying position (Fig. 16).

Figures 19 and 20 show an embodiment in which the dummy die 20 is movably mounted on guides 41 of the support structure 17 and the cross member 30 of the sucking cups 32 is replaced by an arm 50 which is overhanging backwards with respect to the contraction-expansion mechanism 29 to support the sucking cups at a distance from the plugs 31 which is double the length of the stroke of the carriages 27 and 40.

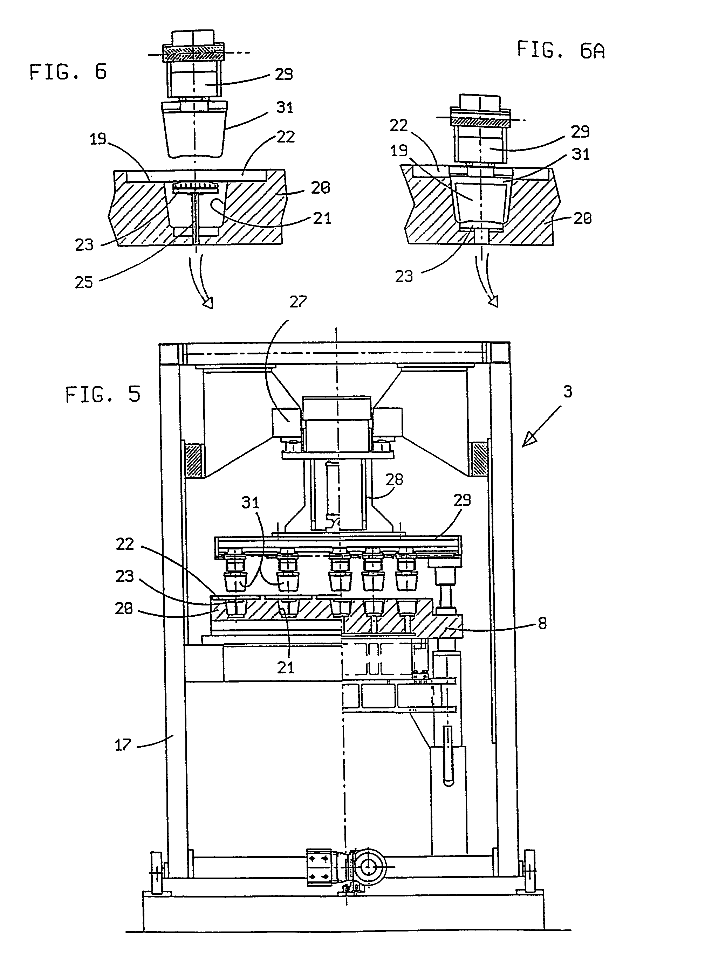

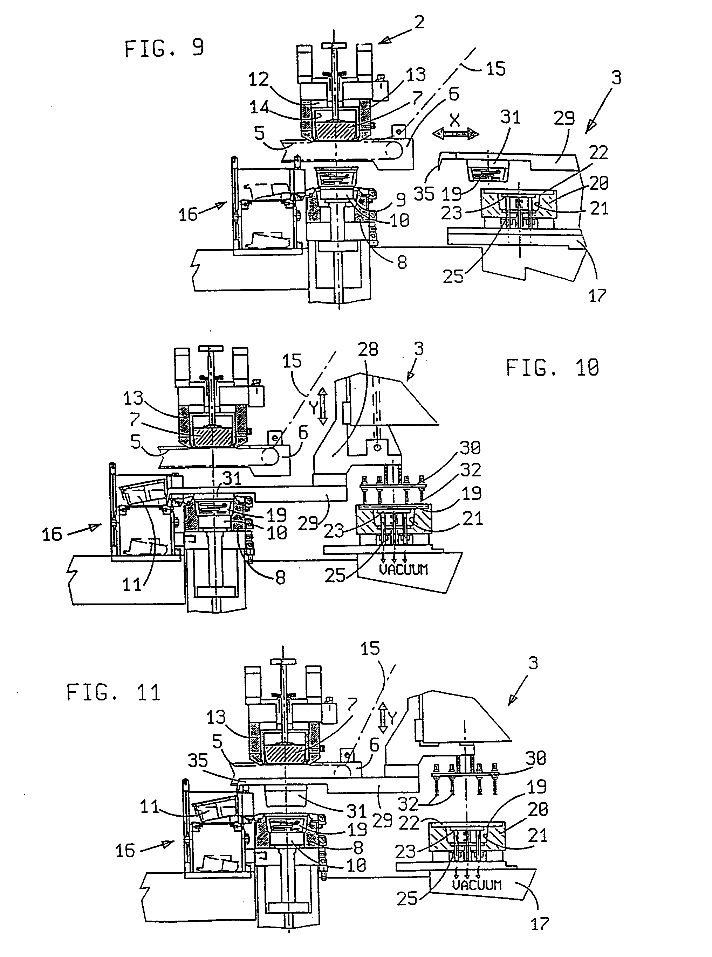

In all the embodiments described above the plugs 31, as is better shown in Fig. 5, are movably supported on the contraction-expansion mechanism 29 so that they can be moved by any suitable linear actuator means in horizontal direction normal to the feeding direction along the guide 26 between an enlarged or expanded position (see the left half of Fig. 5) at the dummy die 20 and a contracted position (see the right half of Fig. 5) at the thermoforming zone. This because the distance among the various shaping cavities 21 of the dummy die is considerably greater than that among the forming cavities 9 in the female die, since the shaping cavities 21 must receive the labels 19 in a flat not pre-shaped condition in their respective top seats 22.

To this end, the various plugs 31 are slidably supported on cross guides and controlled by a reversible linear actuator, not shown in the drawings.
b As it is illustrated in Fig. 1, at each of the two work stations 20 and 18 centering means can be provided, e.g. comprising one or more tubular reference seats 55 with a vertical axis secured to the support structure 17 and as many matching pins 56 carried by the contraction-expansion mechanism 29 and extending downwards to enter the seats 55 in order to accurately center the plugs 31 in axial alignment with the shaping cavities 21 and the forming cavities 9.

Figures 21 to 27 show another specific embodiment of a pre-shaping template or dummy die generally indicated at 60 having a number of seats 61 equal to the number of forming cavities 9 in the female mould 8 and homothetically arranged relative thereto.

The dummy die 60 is designed to cooperate with a number of plug-like sucking elements 31 equal to that of the seats 61.
The transfer head is designed to withdraw a predetermined number of labels from a label feeder, insert them into a respective seat 61 of the pre-shaping template 60 so as to cause them to take a three-dimensional configuration against their respective sucking plug 31, then withdraw and transfer the same to a respective forming cavity 9 of the female mould 8.

As it is better illustrated in Fig. 22, should basin or tray containers being square or rectangular in plan view be labelled, each label 19 is previously punched so as to have a central zone 62 surrounded by two pairs of opposite side wings, respectively short 63 and long 64.

The seats 61 of the shaping template or dummy die 60 have receiving shaping cavities 65 for three-dimensionally pre-shaping the labels 19, which at each comer thereof have a recess or escape 66 which is so shaped as to extend on the prolongation of side wall, e.g. the short one adjacent to the cavity 65 throughout the depth of the seat. Each recess 66 terminates short with a shoulder 67 substantially close to the position of maximum extension of an adjacent wing, such as a long wing 64 urged against the sucking plug 31 (Fig. 24).

With this arrangement, when a label 19 withdrawn and kept adherent to the lower front of a sucking plug 31 at its central zone 62 is forced to take a three-dimensional pre-configuration around the sucking plug following insertion of the sucking plug-label assembly in the cavity 65 of a seat 61, the edges of the wings 63 are arranged against the side wall (that, if desired, can be provided slightly curved) of a respective recess 66. At the same time, the wings 64 of the label are urged against the side wall of the sucking plug 31.

The latter is also formed with inner sucking ducts 68 which communicate through an upper duct 69 with a suitable vacuum source (not shown) and also reach the end portion of the long wings 64, whereas no sucking duct is provided at the recesses 66, where no sucking action is thus produced. Accordingly, the edges of the short wings are not urged towards the sucking plug, and thus the same remain slightly spaced apart from it even after removal from the pre-shaping template and during transfer to a forming cavity 9 of a female mould 8. The configuration taken is thus that illustrated in Figs. 25 and 26.

During subsequent insertion into the female mould 8 the free edges of the wings 63 are caused to adhere around the sucking plug when the edges of the wings 64 already adhere to the sucking plug, and thus no interference can occur with the edges of the wings 64, but possibly overlap the edges of the wings 64 without resulting in wrinkles, pleats or other faults in the positioning of the label.

Once the loading operation has been accomplished, the sucking plug is automatically connected to a source of compressed air for releasing the label in work position inside the mould, ready to promptly heat-adhere to a basing or tray being thermoformed in the mould.
The materials as well as the dimensions could be various depending upon requirements.

In the case of conical containers in the seat 65 of the shaping template or dummy die a single recess or escape 66 can be provided for laying in successive time phases two end edges of the label which must take a substantially slightly open frustoconical configuration before being loaded into the mould.

## Claims

1. An apparatus for loading labels into a mould including a female die and a counter-die or male die arranged to be movable together and away from each other in a machine or press for thermoforming hollow objects (11) having a bottom wall starting from a sheet or strip of thermoformable material fed between female die and counter-die (7), which apparatus has a label feeder (3) and is **characterised in that** it comprises
a dummy female die (20) having a label shaping cavity or cavities (21) homothetic to those of the female die (8), each shaping cavity (21) of the dummy die (20) is formed with a top seat (22) for temporarily receiving and centering labels (19) in a bidimensional configuration before being three-dimensionally pre-shaped in the shaping cavity (21) underneath,
a carriage or slide (27,28) movably mounted in a direction normal to the direction of relative movement towards and away from each other of the said male and female dies, and
a shaping and transferring plug (31) for each seat of the dummy die (20), which plug is carried by said carriage or slide (27,28), thereby being movable between a distal or extracted position with respect to the thermoforming machine in which it is in front of a respective shaping cavity (21) of the dummy die (20) to cooperate therewith to pre-shape and withdraw the labels (19) pre-shaped in the dummy die (20), and a proximal or insertion position in the thermoforming zone between the female die (8) and the sheet of thermoformable material in order to load the labels (19) pre-shaped in, and withdrawn from the dummy die (20) into the female die (8).

2. An apparatus as claimed in claim 1, **characterised in that** each temporary receiving and centering seat (22) in the dummy die (20) is peripherally formed and in axial alignment with its respective shaping cavity (21) underneath.

3. An apparatus as claimed in any claim 1 to 2, **characterised in that** in each shaping cavity (21) of the dummy die (20) an engagement plate means (23) is mounted for upwards and downward movements and is arranged to designed to move between an up most position in which it is flash with the bottom of the receiving and centering seat (22) on top of the shaping cavity thereof and a lower position in which it acts as a bottom wall for its respective shaping cavity (21), the plate means (23) having sucking bores arranged to be connected, upon control, to a vacuum source to engage an intermediate portion of a label centered in the top receiving and centering seat (22) and assist it while being inserted into the shaping cavity (21) by the respective shaping and transferring plug (31).

4. An apparatus as claimed in anyone of the proceeding claims, in which the or each shaping and transferring plug (31) is formed with holes that are connected upon control alternately to a vacuum source for withdrawing a respective label (19) pre-shaped by it in a shaping cavity (21) of the dummy die (20) and to a compressed air source for releasing the same label (19) in a forming cavity (9) of the female die (8), **characterised in that** it comprises carriage or slide means (27) designed to carry the said support structure (28), at least one support and sliding guide (26) for the said carriage or slide means (27) extending in a direction normal to the front of the thermoforming machine, and drive and control means (33) arranged to control the movements of the said carriage and slide means (27) along the or each support and sliding guide (26).

5. An apparatus as claimed in anyone preceding claim, **characterised in that** it comprises feeding means (30) arranged to feed one label (19) at a time to the said receiving and centering seat (22) of each shaping cavity (21) of the dummy female die (20) and designed to synchronously act with the or each plug (31) and to move between a withdrawal position for withdrawing one or more labels (19) from a label source (18), while the plug or plugs (31) are located at the dummy die (20), and a laying position for laying the labels into the respective centering seat (22), while the plug or plugs (31) are inserted in the thermoforming zone.

6. An apparatus as claimed in claim 5, **characterised in that** the said feeding means (30) comprise at least one store (18) for a stack or pile of bidimensional labels (19) and engagement and transfer means (32) arranged to transfer the uppermost label (19) in the or each stack (18) to the receiving and centering seat (22) in a respective shaping cavity (21) in the dummy female die (20).

7. An apparatus as claimed in claim 5, **characterised in that** the said feeding means (30) comprise a tape punching-cutting group (43) and engagement and transfer means (32) for transferring the labels (19) punched out from the said tape group (44) to the receiving and centering seat (22) in a respective shaping cavity (21) in the dummy female die (20).

8. An apparatus as claimed in claim 7, **characterised in that** the said engagement and transfer means (32) comprises at least one sucking cup group, drive means (29) arranged to cause the or each sucking cup group linear or angular movements between the withdrawal and laying position.

9. An apparatus as claimed in claim 8, **characterised in that** the said engagement and transfer means (32) comprises at least one withdrawing group secured to the said carriage or slide (27,28), the distance between the sucking cup group (32) and the shaping and transferring plug or plugs (31) being equal to that between the dummy die and store or punching-cutting group (18, 43).

10. An apparatus as claimed in claim 9, **characterised in that** the said dummy female die (20) is movable between a loading or laying position in which it receives labels (19) from the or each sucking cup group (32) and a pre-shaping position in which it engages with the or each plug (31) for pre-shaping the labels (19) loaded therein.

11. An apparatus as claimed in anyone of the preceding claims, **characterised in that** it comprises extraction or removal means for the objects (11) thermoformed in the thermoforming press (2) designed to act immediately before the said pre-shaping plug or plugs (31) move to the insertion position at the thermoforming zone.

12. An apparatus as claimed in claim 11, **characterised in that** the said extraction or removing means comprises a pusher (35) for the thermoformed objects (11) which is movable together with the pre-shaping plugs (31).

13. An apparatus as claimed in claim 11, **characterised in that** the said extraction or removal means comprises a holding arm or plate for the objects (11) which is arranged to move to and away from the thermoforming zone between male die (7) and female die (8) and to withdraw the thermoformed objects (11) from the female die (8).

14. An apparatus as claimed in claim 11, **characterised in that** the said extraction or removal means comprises at least one nozzle designed to eject an air jet against the objects (11).

15. An apparatus as claimed in anyone claim 8 to 14, **characterised in that** it comprises drive means for the relative synchronised axially-aligned getting near and away movements once between the dummy female die (20) and the plug or plugs (31) and between the sucking cup group (32) and the store (18) or the cutting group (43) and subsequently between the dummy female die (20) and the sucking group and the plug or plugs and the female die (8) of the thermoforming machine (2).

16. An apparatus as claimed in claim 15, **characterised in that** the said drive means (34) comprises at least a linear actuator designed to act at least on the dummy die (20) or on the plug or plugs (31) and on the sucking cup group (32).

17. An apparatus as claimed in anyone of the preceding claims, **characterised in that** it comprises centering means between the said dummy die (20) and the plug or plugs (31) and between the said store (18) or cutting-punching group (43) and the said sucking cup group (32).

18. An apparatus for loading punched labels into a female mould of a thermoforming machine as claimed in any of the claims 1-17, which apparatus comprises a label feeder (32), a pre-shaping three-dimensional template (60) having a number of shaping seats (65) equal to and arranged in an equivalent manner to the forming cavities (9) in the female mould (8), at least one transfer head having a number of sucking plug-like or counter-die elements (31) equal to that and arranged in the same way as the seats (65) of the or the respective pre-shaping template and suitable for withdrawing the labels (19) from the feeder, inserting them into a respective seat (65) of the pre-shaping template (60) and subsequently removing the same therefrom and transferring them into the forming cavities (9) of the female mould (8), and being **characterised in that** the seats (65) of the pre-shaping template (60) have receiving cavities for a three-dimensional pre-shaping of the label (19) on its respective sucking plug, which at each corner thereof are formed with a deep recess (66) arranged to locate therein the edge of one of the wing of each pair of adjacent wings (64), so that such an edge is not caused to adhere to the sucking plug (31) in the seat (65).

19. An apparatus as claimed in claim 18, **characterised in that** the or each recess (66) is shaped so as to extend along the prolongation of a side wall of the respective pre-shaping template (60) and terminate with a shoulder substantially close to the position of maximum extension an adjacent wing (64) must take when urged against the sucking plug (31).

20. An apparatus as claimed in claim 19, **characterised in that** the or each recess (66) has its bottom wall slightly curved inwards to cause a slight bending in the wing (64) of a label (19) received therein to assist in its loading into the mould (8).

21. An apparatus as claimed in any claim 18 to 20, in which the or each sucking plug (31) has inner sucking ducts in communication with a vacuum source, **characterised in that** a number of such ducts open at zones arranged to act an end portion of two non adjacent wings (64) of a label (19), whereas the same do not act on the zone or zones at the or each recess (66), thereby the edges if the short wings (64) of the respective label (19) do not undergo sucking action towards the sucking plug (31), but remain slightly spaced apart from it.

22. A method for loading pre-punched labels (19) having a central zone and side wings into the forming cavity or cavities (9) of a female mould or die (8) of a thermoforming machine or press, which method comprises withdrawing the or each label (19) by means of one or a respective sucking shaping and transferring plug (31) which engages the central zone of each label (19), inserting the or each sucking shaping and transferring plug (31) into a pre-shaping three-dimensional template (60) having a number of seats (65) equal to and having configuration homothetic to that of the forming cavities (9) of the female mould (8) to be loaded, thereby bending the side wings (64) of the or each label (19) against the side walls of the or the respective sucking shaping and transferring plug (31), to which they adhere owing to depression, and is **characterised in that** it comprises
complete adhesion of only one of the edges of each pair of adjacent wings (64) to each corner of the or each sucking shaping and transferring plug (31), whereas the other edge remains slightly away from the sucking shaping and transferring plug (31),
withdrawal from the pre-shaping template and transfer of the or each label (19) in the state of not full adhesion to the or to the respective sucking shaping and transferring plug (31), and
insertion of the label or labels (19) into the female mould (8) by means of the same sucking shaping and transferring plug (31) that performs the shaping in the template (60) and simultaneous shape engagement and setting in work position also of the non adherent edges to the or the respective sucking shaping and transferring plug (31) and possible overlapping without deformation onto the edge of the adjacent wing (64).

23. A method for loading labels into a single-female die of a machine or press (2) for thermoforming labelled hollow objects (11) with a bottom wall **characterised in that** it comprises
withdrawal from a suitable label source (18) of a number of flat labels (19) equal in number to the forming cavities (9) in the said female die (8),
transfer of the withdrawn labels (19) to respective receiving and centering seats (22) in a pre-shaping dummy die (20) homothetic to the female die,
three-dimensional pre-shaping of the labels (19) centered in the dummy die by means of shaping and transferring plugs (31),
withdrawal, transfer and insertion of each pre-shaped label (19) into the female die (8) by means of the same shaping and transferring plug (31) that performs label shaping in the dummy die (20) and simultaneous removal from the female die of the thermoformed labelled object or objects (11).

24. A method as claimed in claim 23, **characterised in that** label transfer occurs by inserting said plugs (31) each bearing a pre-shaped label (19) between the female die (8), on the one side, and the sheet of thermoformable material and the counter die (7) on the other side.

## Patentansprüche

1. Vorrichtung zum Einlegen von Etiketten in ein Formwerkzeug, das eine weibliche Formwerkzeughälfte und eine Gegen- oder männliche Formwerkzeughälfte aufweist, die in einer Maschine oder Presse aufeinander zu und voneinander weg verfahrbar sind, um ausgehend von einer zwischen der weiblichen Formwerkzeughälfte und der Gegen-Formwerkzeughälfte (7) geführten Bahn oder Streifen eines thermoformbaren Materials, durch Thermoformen hohle Artikel (11) mit einer Bodenwandung herzustellen, wobei die Vorrichtung mit einem Etiketten-Zuführgerät (3) versehen und **dadurch gekennzeichnet** ist, daß sie aufweist:
ein weibliches Leer-Formwerkzeug (20) mit einem das Etikett formenden Hohlraum oder Hohlräumen (21) von gleicher Formgebung wie diejenigen der weiblichen Formwerkzeughälfte (8), wobei jeder formende Hohlraum (21) des Leer-Formwerkzeuges (20) mit einem oberen Sitz (22) zum zeitweiligen Aufnehmen und Zentrieren der Etiketten (19) in einer zweidimensionalen Anordnung vor dem dreidimensionalen Umformen in dem darunterliegenden formenden Hohlraum (21) ausgebildet ist,
einen Wagen oder Schlitten (27, 28), der in einer Richtung verfahrbar ist, die quer zur Richtung der relativen Bewegung aufeinander zu und voneinander weg der männlichen und der weiblichen Formwerkzeughälfte verläuft, und
einen Formgebungs- und Überführungsstempel (31) für jeden Sitz des Leer-Formwerkzeuges (20), wobei der Stempel von dem Wagen oder Schlitten (27, 28) gehalten wird und auf diese Weise zwischen einer distalen oder ausgefahrenen Stellung bezüglich der Thermoformmaschine, in der er sich vor einem zugeordneten formenden Hohlraum (21) des Leer-Formwerkzeuges (21) befindet, um mit diesem zum Vorformen und zur Entnahme der in dem Leer-Formwerkzeug (20) geformten Etiketten (19) zusammenzuwirken und einer proximalen oder eingefahrenen Stellung in dem Thermoformbereich zwischen der weiblichen Formwerkzeughälfte (8) und der Bahn aus thermoformbaren Material verfahrbar ist, um die in dem Leer-Formwerkzeug vorgeformten und daraus entnommenen Etiketten (19) in die weibliche Formwerkzeughälfte (8) einzulegen.

2. Vorrichtung nach Anspruch 1, **dadurch gekennzeichnet, daß** jeder Sitz (22) im Leer-Formwerkzeug (20) zum zeitweiligen Aufnehmen und Zentrieren peripher ausgebildet und axial fluchtend mit dem zugeordneten, darunterliegenden formenden Hohlraum (21) ausgerichtet ist.

3. Vorrichtung nach Anspruch 1 oder 2, **dadurch gekennzeichnet, daß** in jedem formenden Hohlraum (21) des Leer-Formwerkzeuges (21) ein auf- und abwärts bewegliches Mitnahme-Plattenmittel (23) angeordnet ist, das zwischen einer oberen Endstellung, in der es mit dem Boden des aufnehmenden und zentrierenden Sitzes (22) an der Oberseite von dessen formenden Hohlraum fluchtet, und einer unteren Endstellung bewegbar ist, in der es als Bodenwandung für den jeweiligen formenden Hohlraum (21) wirkt, wobei das Plattenmittel (23) Saugbohrungen aufweist, die gesteuert mit einer Unterdruckquelle verbindbar sind, um einen mittleren Bereich eines Etiketts zu erfassen, das in dem oberen aufnehmenden und zentrierenden Sitz (22) zentriert ist, und dies unterstützen, während es mittels des zugehörigen Formgebungs-und Überführungsstempels (31) in den formenden Hohlraum (21) eingeführt wird.

4. Vorrichtung nach einem der vorhergehenden Ansprüche, bei der der oder die Formgebungs- und Überführungsstempel (31) mit Öffnungen versehen sind, die gesteuert entweder mit einer Unterdruckquelle zum Entnehmen eines jeweiligen, in einem formenden Hohlraum (21) des Leer-Formwerzeuges (20) durch den Stempel (31) vorgeformten Etiketts (19) oder mit einer Druckluftquelle zum Übergeben des selben Etiketts (19) an einen formenden Hohlraum (9) der weiblichen Formwerkzeughälfte (8), **dadurch gekennzeichnet, daß** sie ein Wagen- oder Schlittenmittel (27) zum Halten der Tragestruktur (28), mindestens eine Trag- oder Gleitführung (26) für den Wagen oder Schlitten (27), die sich in einer Richtung quer zur Vorderseite der Thermoformmaschine erstreckt, und ein Antriebs-und Steuermittel (33) aufweist, das die Bewegungen des Wagens und des Schlittenelementes (27) entlang der der Trag- und Schlittenführung oder Führungen (26) steuert.

5. Vorrichtung nach einem der vorhergehenden Ansprüche, **dadurch gekennzeichnet, daß** sie ein Zuführmittel (30) zum Zuführen jeweils eines Etiketts (19) zu dem Aufnahme- und Zentrierungssitz (22) des formgebenden Hohlraums (21) des Leer-Formwerkzeugs (20) aufweist, wobei das Zuführmittel (30) synchron mit dem Stempel oder den Stempeln (31) zusammenarbeitet und sich zwischen einer zurückgezogenen Stellung zum Entnehmen eines oder mehrerer Etiketten (19) aus einem Etikettenspeicher (18) bewegt, während der Stempel oder die Stempel (31) in dem Leer-Formwerkzeug (20) angeordnet sind, und einer Ablagestellung zum Ablegen der Etiketten in den jeweiligen Zentrierungssitz (22), während der Stempel oder die Stempel (31) in den Thermoformbereich eingefahren sind.

6. Vorrichtung nach Anspruch 5, **dadurch gekennzeichnet, daß** das Zuführmittel (30) mindestens einen Speicher (18) für einen Stoß oder Stapel zweidimensionaler Etiketten (19) sowie Mittel (32) zum Erfassen und Überführen zum Überführen des jeweils obersten Etiketts (19) in dem Stapel oder den Stapeln (18) in den aufnehmenden und zentrierenden Sitz (22) in einem zugehörigen formenden Hohlraum (21) in der weiblichen Formwerkzeughälfte (20) aufweist.

7. Vorrichtung nach Anspruch 5, **dadurch gekennzeichnet, daß** die Zuführmittel (30) eine Stanzgruppe (43) sowie ein Mittel (32) zum Erfassen und Überführen aufweist, das die aus dem Band (44) ausgestanzten Etiketten (19) zu dem Aufnahme- und Zentrierungssitz (22) in einem zugehörigen Hohlraum (21) des weiblichen Formwerkzeugs (20) überführt.

8. Vorrichtung nach Anspruch 7, **dadurch gekennzeichnet, daß** das Mittel (32) zum Erfassen und Überführen mindestens eine Saugkopfgruppe sowie ein Antriebsmittel (29) aufweist, das lineare oder Drehbewegungen des Saugkopfs oder der Saugköpfe zwischen der Entnahmestellung und der Ablagestellung bewirkt.

9. Vorrichtung nach Anspruch 8, **dadurch gekennzeichnet, daß** das Mittel (32) zum Erfassen und Überführen mindestens eine Entnahmegruppe aufweist, die an dem Wagen oder Schlitten (27, 28) befestigt ist, wobei der Abstand der Saugkopfgruppe (32) und dem Form- und Überführungsstempel oder den Stempeln (31) gleich dem Abstand zwischen dem Leer-Formwerkzeug und der Gruppe (18, 43) zum Speichern und Stanzen ist.

10. Vorrichtung nach Anspruch 9, **dadurch gekennzeichnet, daß** das Leer-Formwerkzeug (20) zwischen einer Lade- oder Ablagestellung, in der es Etiketten (19) von der Saugkopfgruppe oder den Saugkopfgruppen (32) übernimmt, und einer Vorformstellung verfahrbar ist, in der es in Eingriff mit dem Stempel oder den Stempeln (31) für das Vorformen der Etiketten (19) in dem Leer-Formwerkzeug (20) gerät.

11. Vorrichtung nach einem der vorhergehenden Ansprüche, **dadurch gekennzeichnet, daß** sie ein Mittel zum Herausnehmen und Entfernen von in der Thermoformpresse (2) thermogeformten Artikeln (11) aufweist, das unmittelbar wirksam wird, bevor der vorformende Stempel oder die Stempel (31) sich in die Einführungsstelllung in den Thermoformbereich bewegen.

12. Vorrichtung nach Anspruch 11, **dadurch gekennzeichnet, daß** das Mittel zum Herausnehmen und Entfernen einen Stößel (35) für die thermogeformten Artikel (11) aufweist, der zusammen mit den vorformenden Stempeln (31) verfahrbar ist.

13. Vorrichtung nach Anspruch 11, **dadurch gekennzeichnet, daß** das Mittel zum Herausnehmen und Entfernen einen Haltearm oder eine Halteplatte für die Artikel (11) aufweist, die zwischen der männlichen Formwerkzeughälfte (7) und der weiblichen Formwerkzeughälfte (8) auf den Thermoformbereich zu und von diesem fort verfahrbar ist und mittels derer die thermogeformten Artikel (11) aus der weiblichen Formwerkzeughälfte (8) entnehmnar sind.

14. Vorrichtung nach Anspruch 11, **dadurch gekennzeichnet, daß** das Mittel zum Herausnehmen und Entfernen mindestens eine Düse zum Verströmen eines Luftstroms gegen die Artikel (11) aufweist.

15. Vorrichtung nach einem der Ansprüche 8 bis 14, **dadurch gekennzeichnet, daß** sie ein Antriebsmittel für eine relative, synchronisierte, axial ausgerichtete Annäherungs- und Fortbewegung zwischen der weiblichen Leer-Formwerkzeughälfte (20) und dem Stempel oder den Stempeln (31) sowie zwischen der Saugkopfgruppe (32) und dem Speicher (18) oder der Schneidgruppe (43), und weiterhin zwischen dem weiblichen Leer-Formwerkzeug (20) und der Sauggruppe und dem Stempel oder den Stempeln und dem weiblichen Formwerkzeug (8) der Thermoformmaschine (2) aufweist.

16. Vorrichtung nach Anspruch 15, **dadurch gekennzeichnet, daß** das Antriebsmittel (34) mindestens eine lineare Betätigungseinheit aufweist, die mindestens auf das Leer-Formwerkzeug (20) oder auf den Stempel oder die Stempel (31) sowie auf die Saugkopfgruppe (32) einwirkt.

17. Vorrichtung nach einem der vorhergehenden Ansprüche, **dadurch gekennzeichnet, daß** sie ein Mittel zum Zentrieren zwischen dem Leer-Formwerkzeug (20) und dem Stempel oder den Stempeln (31) und zwischen dem Speicher (18) oder der Stanzgruppe (43) und der Saugkopfgruppe (32) aufweist.

18. Vorrichtung zum Zuführen von gestanzten Etiketten in ein weibliches Formwerkzeug einer Thermoformmaschine nach einem der Ansprüche 1 bis 17, wobei die Vorrichtung einen Etiketten-Zuführer (32), eine vorformende, dreidimensionale Schablone (60) mit einer Mehrzahl von formenden Sitzen (65) entsprechend der Anzahl und der Positionierung der formenden Hohlräume (9) in der weiblichen Formwerkzeughälfte (8), mit mindestens einem Überführungskopf mit einer Mehrzahl von ansaugenden, stempelähnlichen oder Gegenformelementen (31) gleicher Anzahl und Anordnung wie die Sitze (65) der entsprechenden vorformenden Schablone oder Schablonen, und geeignet zum Entnehmen der Etiketten (19) aus dem Zuführer, zu deren Einführung in den entsprechenden Sitz (65) der vorformenden Schablone (60) und zum nachfolgenden Entnehmen daraus und zu deren Überführung in die formenden Hohlräume (9) der weiblichen Formwerkzeughälfte (8), **dadurch gekennzeichnet, daß** die Sitze (65) der vorformenden Schablone (60) Aufnahmehohlräume für ein dreidimensionales Vorformen des Etiketts (19) auf dem jeweiligen Saugstempel aufweisen, der an jeder seiner Ecken mit einer tiefen Ausnehmung (66) versehen ist, die so ausgebildet ist, daß eine Kante eines Flügels eines Paars von aneinander grenzenden Flügeln (64) darin untergebracht werden kann, derart, daß eine Kante nicht an dem Saugstempel (31) in dem Sitz (65) anliegen muß.

19. Vorrichtung nach Anspruch 18, **dadurch gekennzeichnet, daß** die Ausnehmung oder die Ausnehmungen (66) so geformt sind, daß sie sich in Verlängerung einer Seitenwand der zugehörigen vorformenden Schablone (60) erstrecken und in einer Schulter auslaufen, die sich im wesentlichen dicht an der Stellung der maximalen Erstreckung befindet, die ein angrenzender Flügel (64) einnehmen muß, wenn er gegen den Saugstempel (31) gedrückt wird.

20. Vorrichtung nach Anspruch 19, dadurch gekennzeichent, daß die Ausnehmung oder Ausnehmungen (66) eine geringfügig nach innen gewölbte Bodenwandung aufweisen, um eine geringfügige Verbiegung des Flügels (64) eines darin aufgenommenen Etiketts (19) zu bewirken und dadurch das Zuführen in das Formwerkzeug (8) zu erleichtern.

21. Vorrichtung nach einem der Ansprüche 18 bis 20, bei der der Saugstempel oder die Saugstempel (31) innere Saugkanäle aufweisen, die mit einer Unterdruckquelle in Verbindung stehen, **dadurch gekennzeichnet, daß** eine Anzahl der Kanäle in Bereichen mündet, die als Endbereich zweier nicht aneinander grenzenden Flügel (64) eines Etiketts (19) wirken, wohingegen diese nicht auf einen Bereich oder auf Bereiche an der Ausnehmung oder den Ausnehmungen (66) wirken, derart, daß die Kanten der kurzen Flügel (64) des jeweiligen Etiketts (19) keiner Saugwirkung auf den Saugstempel (31) zu unterliegen sondern von diesem beabstandet bleiben.

22. Verfahren zum Einlegen von vorgestanzten, mit einem zentralen Bereich und mit seitlichen Flügeln versehenen Etiketten (19) in einen formenden Hohlraum oder Hohlräume (9) eines weiblichen Formwerkzeuges oder Werkzeuges (8) einer Thermoformmaschine oder -presse, wobei das Verfahren das Entnehmen des Etiketts oder der Etiketten (19) mittels eines oder eines zugehörigen ansaugenden, formenden und überführenden Stempels (31) umfaßt, der den zentrale Bereich der Etiketten (19) ergreift, und weiterhin das Einführen des oder der ansaugenden, formenden und überführenden Stempel (31) in eine vorformende, dreidimensionale Schablone (60) mit einer Mehrzahl von Sitzen (65), die eine gleiche Formgebung wie die formenden Hohlräume (9) der zu bestückenden weiblichen Formwerkzeughälfte (8) aufweisen, wodurch die seitlichen Flügel (64) des Etiketts oder der Etiketten (19) gegen die Seitenwände des zugehörigen ansaugenden, formenden und überführenden Stempels oder der Stempel (31), an denen sie anhaften, gedrückt werden, **dadurch gekennzeichnet, daß** es umfaßt:
ein vollständiges Anhaften nur einer der Kanten eines Paars von aneinander angrenzenden Flügeln (64) an eine Ecke des zugehörigen ansaugenden, formenden und überführenden Stempels oder der Stempel (31), wohingegen die andere Kante geringfügig von dem ansaugenden, formenden und überführenden Stempel (31) beabstandet bleibt,
Entnehmen des Etiketts oder der Etiketten (19) aus der vorformenden Schablone und Überführen in den Zustand des nicht vollständigen Anhaftens an den ansaugenden, formenden und überführenden Stempel oder die Stempel (31), und
Einführen des Etiketts oder der Etiketten (19) in die weibliche Formwerkzeughälfte (8) mittels des selben formenden und überführenden Stempels (31), der das Verformen in der Schablone (60) besorgt, und gleichzeitiges Ineingriffbringen zum Verformen und Verbringen in eine Bearbeitungsstellung auch der nicht-anhaftenden Ecken an den ansaugenden, formenden und überführenden Stempel oder die Stempel (31) und mögliches Überlappen mit der Kante des angrenzenden Flügels (64).

23. Verfahren zum Einlegen von Etiketten in eine einfache weibliche Formwerkzeughälfte einer Maschine oder Presse (2) zum Thermoformen von mit einem Etikett versehenen hohlen Artikeln (11) mit einer Bodenwandung, **dadurch gekennzeichnet, daß** es umfaßt:
Entnehmen einer Mehrzahl flacher Etiketten (19) aus einem entsprechenden Etikettenspeicher (18) entsprechend der Anzahl von formenden Hohlräumen (9) in der weiblichen Formwerkzeughälfte (8),
Überführen der entnommenen Etiketten (19) in entsprechende Aufnahme- und Zentrierungssitze (22) in einem vorformenden Leer-Formwerkzeug (20) von gleicher Formgebung wie die weibliche Formwerkzeughälfte,
dreidimensionales Vorformen der in dem Leer-Formwerkzeug zentrierten Etiketten (19) mittels formender und überführender Stempel (31),
Entnehmen, Überführen und Einführen der vorgeformten Etiketten (19) in die weibliche Formwerkzeughälfte (8) mittels des selben Form- und Überführungsstempels (31) der das Formen des Etiketts in dem Leer-Formwerkzeug (20) besorgt, und gleichzeitiges Entnehmen des thermogeformten, etikettierten Artikels oder der Artikel (11) aus der weiblichen Formwerkzeughälfte.

24. Verfahren nach Anspruch 23, **dadurch gekennzeichnet, daß** das Überführen des Etiketts durch Einführen der Stempel (31), von denen jeder ein vorgeformtes Etikett (19) trägt, zwischen der weiblichen Formwerkzeughälfte (8) auf der einen Seite und der Bahn von thermoformbarem Material und dem Gegen-Formwerkzeug (7) auf der anderen Seite erfolgt.

## Revendications

1. Dispositif destiné à charger des étiquettes dans un moule comprenant une matrice femelle et une contre-matrice ou matrice mâle disposées de façon à pouvoir s'approcher et s'éloigner l'une de l'autre dans une machine ou presse de thermoformage d'objets creux (11) comportant une paroi inférieure commençant à partir d'une feuille ou bande de matériau thermoformable amenée entre la matrice femelle et la contre-matrice (7), lequel dispositif comporte un dispositif d'alimentation en étiquettes (3) et est **caractérisé en ce qu'**il comprend
une matrice femelle modèle (20) comportant une ou plusieurs cavité(s) de formage d'étiquette (21) aux dimensions homothétiques à celles de la matrice femelle (8), chaque cavité de formage (21) de la matrice modèle (20) comprend une surface d'appui supérieure (22) destinée à recevoir temporairement et à centrer les étiquettes (19) ayant une conformation bidimensionnelle avant qu'elles soient préformées de manière tridimensionnelle dans la cavité de formage (21) située en-dessous,
un chariot ou coulisseau (27, 28) monté de manière mobile selon une direction perpendiculaire à la direction de déplacement relatif desdites matrices mâle et femelle se rapprochant ou s'écartant l'une de l'autre, et
un tampon de formage et de transfert (31) pour chaque surface d'appui de la matrice modèle (20), lequel tampon est porté par ledit chariot ou coulisseau (27, 28), étant ainsi mobile entre une position distale ou d'extraction par rapport à la machine de thermoformage dans laquelle il se trouve en face d'une cavité de formage (21) respective de la matrice modèle (20) de façon à coopérer avec celle-ci afin de préformer et de retirer les étiquettes (19) préformées dans la matrice modèle (20), et une position proximale ou d'insertion dans la zone de thermoformage entre la matrice femelle (8) et la feuille de matériau thermoformable, afin de charger les étiquettes (19) préformées dans la matrice modèle (20) et retirées de celle-ci à l'intérieur de la matrice femelle (8).

2. Dispositif selon la revendication 1, **caractérisé en ce que** chaque surface d'appui de réception temporaire et de centrage (22) de la matrice modèle (20) est formée sur sa périphérie par sa cavité de formage respective (21) située en-dessous et est en alignement axial avec celle-ci.

3. Dispositif selon l'une quelconque des revendications 1 à 2, **caractérisé en ce qu'**un moyen formant plaque de contact (23) est monté dans chaque cavité de formage (21) de la matrice modèle (20) de façon à effectuer des mouvements ascendants et descendants et est disposé de façon à se déplacer entre une position la plus haute dans laquelle il est au même niveau que le bas de la surface d'appui de réception et de centrage (22) au sommet de la cavité de formage de celle-ci et une position plus basse dans laquelle il agit en tant que paroi de fond pour sa cavité de formage (21) respective, le moyen formant plaque (23) comportant des trous d'aspiration disposés de façon à être reliés, de manière commandée, à une source d'application de vide afin de coopérer avec une partie intermédiaire d'une étiquette centrée dans la surface d'appui de réception et de centrage supérieure (22) et d'aider son insertion à l'intérieur de la cavité de formage (21) par le tampon de formage et de transfert (31) respectif.

4. Dispositif selon l'une quelconque des revendications précédentes, dans lequel le ou chaque tampon de formage et de transfert (31) comprend des trous reliés en alternance, de manière commandée, à une source d'application de vide, de façon à retirer une étiquette (19) respective qu'il a préformée dans une cavité de formage (21) de la matrice modèle (20), et à une source d'air comprimé, de façon à lâcher la même étiquette (19) dans une cavité de formage (9) de la matrice femelle (8), **caractérisé en ce qu'**il comprend un moyen formant chariot ou coulisseau (27) conçu pour porter ladite structure de support (28), au moins un guide de support ou de coulissement (26) dudit moyen formant chariot ou coulisseau (27) s'étendant selon une direction perpendiculaire à la partie avant de la machine de thermoformage, et un moyen d'entraînement et de commande (33) configuré de façon à commander les mouvements dudit moyen formant chariot et coulisseau (27) le long du ou de chaque guide de support et de coulissement (26).

5. Dispositif selon l'une quelconque des revendications précédentes, **caractérisé en ce qu'**il comprend un moyen d'amenée (30) disposé de façon à amener les étiquettes (19) une par une à ladite surface d'appui de réception et de centrage (22) de chaque cavité de formage (21) de la matrice femelle modèle (20) et conçu pour agir de manière synchrone avec le ou chaque tampon (31) et pour se déplacer entre une position de prélèvement destinée à prélever une ou plusieurs étiquette(s) (19) d'une source d'étiquettes (18), pendant que le ou les tampons (31) est ou sont positionné(s) au niveau de la matrice modèle (20), et une position de pose destinée à poser les étiquettes à l'intérieur de la surface d'appui de centrage (22) respective, pendant que le ou les tampon(s) (31) est ou sont inséré(s) dans la zone de thermoformage.

6. Dispositif selon la revendication 5, **caractérisé en ce que** ledit moyen d'amenée (30) comprend au moins un magasin (18) contenant un empilement ou une pile d'étiquettes bidimensionnelles (19) et un moyen de prise et de transfert (32) disposé de façon à transférer l'étiquette (19) la plus haute dans la ou chaque pile (18) à la surface d'appui de réception et de centrage (22) d'une cavité de formage (21) respective de la matrice femelle modèle (20).

7. Dispositif selon la revendication 5, **caractérisé en ce que** ledit moyen d'amenée (30) comprend un groupe de coupe-poinçonnage à bande (43) et un moyen de prise et de transfert (32) destiné à transférer les étiquettes (19) découpées à la matrice dudit groupe à bande (44) à la surface d'appui de réception et de centrage (22) d'une cavité de formage (21) respective de la matrice femelle modèle (20).

8. Dispositif selon la revendication 7, **caractérisé en ce que** ledit moyen de prise et de transfert (32) comprend au moins un groupe à ventouse, un moyen d'entraînement (29) configuré de façon à provoquer des déplacements linéaires ou angulaires du ou de chaque groupe à ventouse entre la position de prélèvement et la position de pose.

9. Dispositif selon la revendication 8, **caractérisé en ce que** ledit moyen de prise et de transfert (32) comprend au moins un groupe de prélèvement fixé audit chariot ou coulisseau (27, 28), la distance entre le groupe à ventouse (32) et le ou les tampon(s) de formage et de transfert (31) étant égale à celle entre la matrice modèle et le magasin ou groupe de coupe-poinçonnage (18, 43).

10. Dispositif selon la revendication 9, **caractérisé en ce que** ladite matrice femelle modèle (20) est mobile entre une position de charge ou de pose dans laquelle elle reçoit des étiquettes (19) du ou de chaque groupe à ventouse (32) et une position de préformage dans laquelle elle coopère avec le ou chaque tampon (31) pour préformer les étiquettes (19) qui y sont chargées.

11. Dispositif selon l'une quelconque des revendications précédentes, **caractérisé en ce qu'**il comprend un moyen d'extraction ou d'enlèvement des objets (11) thermoformés dans la presse de thermoformage (2) conçu pour agir immédiatement avant que ledit ou lesdits tampon(s) de préformage (31) se déplace(nt) vers sa ou leur position d'insertion au niveau de la zone de thermoformage.

12. Dispositif selon la revendication 11, **caractérisé en ce que** ledit moyen d'extraction ou d'enlèvement comprend un poussoir (35) des objets thermoformés (11) qui est mobile en même temps avec les tampons de préformage (31).

13. Dispositif selon la revendication 11, **caractérisé en ce que** ledit moyen d'extraction et d'enlèvement comprend un bras ou plaque de support des objets (11) qui est disposé de façon à s'approcher ou à s'éloigner de la zone de thermoformage entre la matrice mâle (7) et la matrice femelle (8) et à retirer les objets thermoformés (11) de la matrice femelle (8).

14. Dispositif selon la revendication 11, **caractérisé en ce que** ledit moyen d'extraction ou d'enlèvement comprend au moins une buse conçue pour éjecter un jet d'air contre les objets (11).

15. Dispositif selon l'une quelconque des revendications 8 à 14, **caractérisé en ce qu'**il comprend un moyen d'entraînement pour effectuer les déplacements relatifs alignés axialement et synchronisés de rapprochement et d'éloignement une première fois entre la matrice femelle modèle (20) et le ou les tampon(s) (31) et entre le groupe à ventouse (32) et le magasin (18) ou le groupe de coupe (43), et par la suite entre la matrice femelle modèle (20) et le groupe d'aspiration et le ou les tampon(s) et la matrice femelle (8) de la machine de thermoformage (2).

16. Dispositif selon la revendication 15, **caractérisé en ce que** ledit moyen d'entraînement (34) comprend au moins un actionneur linéaire conçu pour agir au moins sur la matrice modèle (20) ou sur le ou les tampon(s) (31) et sur le groupe à ventouse (32).

17. Dispositif selon l'une quelconque des revendications précédentes, **caractérisé en ce qu'**il comprend un moyen de centrage entre ladite matrice modèle (20) et le ou les tampon(s) (31) et entre ledit magasin (18) ou le groupe de coupe-poinçonnage (43) et ledit groupe à ventouse (32).

18. Dispositif destiné à charger des étiquettes poinçonnées dans un moule femelle d'une machine de thermoformage selon l'une quelconque des revendications 1 à 17, lequel dispositif comprend un dispositif d'alimentation en étiquettes (32), un modèle tridimensionnel de préformage (60) comportant des surfaces d'appui de formage (65) au même nombre que les cavités de formage (9) du moule femelle (8) et disposées d'une manière équivalente à celles-ci, au moins une tête de transfert comportant des éléments de contre-matrice ou en forme de tampons aspirants (31) au même nombre que les surfaces d'appui (65) du modèle de préformage unique ou respectif et disposés de la même manière que celles-ci, et appropriés pour retirer les étiquettes (19) du dispositif d'alimentation, pour les insérer dans une surface d'appui (65) du modèle de préformage (60) et pour les enlever par la suite de celui-ci pour finalement les transférer dans les cavités de formage (9) du moule femelle (8), et étant **caractérisé en ce que** les surfaces d'appui (65) du modèle de préformage (60) comportent des cavités de réception servant au préformage tridimensionnel de l'étiquette (19) sur son tampon aspirant respectif, ces cavités de réception comprenant à chaque angle un évidement profond (66) disposé de façon à y positionner le bord d'une aile de chaque paire d'ailes adjacentes (64), afin d'éviter qu'un bord ne se colle au tampon aspirant (31) dans la surface d'appui (65).

19. Dispositif selon la revendication 18, **caractérisé en ce que** le ou chaque évidement (66) est formé de façon à s'étendre le long du prolongement d'une paroi latérale du modèle de préformage (60) respectif et à se terminer avec un épaulement assez proche de la position d'extension maximale qu'une aile adjacente (64) doit prendre lorsqu'elle est poussée contre le tampon aspirant (31).

20. Dispositif selon la revendication 19, **caractérisé en ce que** la paroi inférieure du ou de chaque évidement (66) est légèrement incurvée vers l'intérieur de façon à créer un léger cintrage dans l'aile (64) d'une étiquette (19) qui y est reçue, afin d'aider son chargement dans le moule (8).

21. Dispositif selon l'une quelconque des revendications 18 à 20, dans lequel le ou chaque tampon aspirant (31) comporte des conduits d'aspiration en communication avec une source d'application de vide, **caractérisé en ce qu'**un certain nombre de ces conduits d'aspiration s'ouvre au niveau de zones disposées de façon à agir sur une partie d'extrémité de deux ailes (64) non adjacentes d'une étiquette (19), tandis que ceux-ci n'ont aucune action sur la ou les zone(s) au niveau du ou de chaque évidement (66), et de ce fait, les bords des ailes courtes (64) de l'étiquette (19) respective ne subissent aucune action d'aspiration vers le tampon aspirant (31), et restent légèrement écartés de celui-ci.

22. Procédé de chargement d'étiquettes pré-poinçonnées (19) comportant une zone centrale et des ailes latérales dans la ou les cavité(s) de formage (9) d'un moule ou matrice femelle (8) d'une machine ou presse de thermoformage, lequel procédé comprend les étapes consistant à prélever la ou chaque étiquette (19) au moyen d'un tampon de formage et de transfert aspirant (31) respectif qui coopère avec la zone centrale de chaque étiquette (19), à insérer le ou chaque tampon de formage et de transfert aspirant (31) dans un modèle tridimensionnel de préformage (60) comportant des surfaces d'appui (65) au même nombre que les cavités de formage (9) du moule femelle (8) à charger et dont la conformation est homothétique à la conformation de celles-ci, cintrant ainsi les ailes latérales (64) de la ou de chaque étiquette (19) contre les parois latérales du tampon de formage et de transfert aspirant (31) unique ou respectif, auxquelles elles adhèrent sous l'action de la dépression, et est **caractérisé en ce qu'**il comprend les étapes consistant à :
faire adhérer complètement un seul des bords de chaque paire d'ailes adjacentes (64) à chaque angle du ou de chaque tampon de formage et de transfert aspirant (31), tandis que l'autre bord reste légèrement écarté du tampon de formage et de transfert aspirant (31),
retirer du modèle de préformage et transférer l'étiquette ou chaque étiquette (19) à l'état d'une adhérence incomplète au tampon de formage et de transfert (31) unique ou respectif, et
insérer la ou les étiquette(s) (19) dans le moule femelle (8) au moyen du même tampon de formage et de transfert aspirant (31) que celui qui effectue le formage dans le modèle (60), et simultanément faire prendre la forme ainsi que régler aussi la position de travail des bords non adhérents au tampon de formage et de transfert aspirant (31) unique ou respectif, et les faire chevaucher éventuellement sans déformation sur le bord de l'aile adjacente (64).

23. Procédé de chargement d'étiquettes dans une matrice femelle simple d'une machine ou d'une presse (2) de thermoformage d'objets creux étiquetés (11) dotés d'une paroi inférieure, **caractérisé en ce qu'**il comprend les étapes consistant à :
prélever d'une source d'étiquettes appropriée (18) des étiquettes planes (19) au même nombre que les cavités de formage (9) de ladite matrice femelle (8),
transférer les étiquettes prélevées (19) aux surfaces d'appui de réception et de centrage (22) respectives d'une matrice modèle de préformage (20) aux dimensions homothétiques à celles de la matrice femelle,
préformer de façon tridimensionnelle les étiquettes (19) centrées dans la matrice modèle au moyen de tampons de formage et de transfert (31),
retirer, transférer et insérer chacune des étiquettes préformées (19) dans la matrice femelle (8) au moyen du même tampon de formage et de transfert (31) que celui qui effectue le formage de l'étiquette dans la matrice modèle (20), et enlever simultanément de la matrice femelle le ou les objet(s) étiqueté(s) thermoformé(s) (11).

24. Procédé selon la revendication 23, **caractérisé en ce que** l'étape de transfert d'étiquette se produit par l'étape consistant à insérer chacun desdits tampons (31) portant une étiquette préformée (19) entre la matrice femelle (8), d'un côté, et la feuille de matériau thermoformable et la contre-matrice (7) de l'autre côté.
